# EUROPEAN PATENT APPLICATION

(11) **EP 3 407 571 A1**
(43) Date of publication of application: **28.11.2018**
(21) Application number: 18172857.7
(22) Date of filing: 17.05.2018
(51) Int. Cl.: H04L 29/12, H04L 29/08

(54) **METHOD FOR PROVIDING NETWORK-BASED SERVICES TO USER OF NETWORK STORAGE SERVER, ASSOCIATED NETWORK STORAGE SERVER AND ASSOCIATED STORAGE SYSTEM**

(30) Priority: 22.05.2017 US 201762509200 P; 06.05.2018 US 201815972218
(71) Applicant: Synology Incorporated, Taipei 103 (TW)
(72) Inventor: Huang, Yi-Chan, 103 Taipei (TW); Chou, Bo-Cun, 103 Taipei (TW)
(74) Representative: Michalski Hüttermann & Partner Patentanwälte mbB

(57) **Abstract**

A method for providing network-based services to a user of a network storage server (110) includes: associating the network storage server (110) with a virtual machine running at a disaster recovery site; replicating data associated with the network-based services from the network storage server (110) to the virtual machine; configuring a first DDNS setting of a DNS server, wherein the first DDNS setting is arranged to map a public domain name to a public IP address of the network storage server (110); configuring a first private DNS setting of a private DNS server, wherein the first private DNS setting is arranged to map a private domain name to a private network IP address of the network storage server (110). When the network storage server (110) is in a non-working status, the network-based services are recovered to the virtual machine running on the disaster recovery site.

## Description

### Field of the Invention

The present invention relates to network storage control, and more particularly, to a method for providing network-based services to a user of a network storage server, the associated network storage server and associated storage systems.

### Background of the Invention

Nowadays, computer and communication systems require more and more storage space to store important files and media data. Conventionally, a person can carry a USB drive to store data and plug it into a computer to access the data. However, with advances in network communication technology, people tends to access data over internet instead of the USB drive. Network-based storage devices such as network attached storage (NAS) servers fulfill the need of accessing massive data over the Internet.

A NAS server can provide data accessing function for multiple users. Furthermore, a NAS server can not only store and share data, but also serve as a media entertainment center and a surveillance center. Especially for home users or medium-sized enterprises, it is very important for them to connect to their NAS server whenever they want so that they can use various services provided by the NAS. In order to make sure the services provided by the NAS will not fail, a disaster recovery (DR) plan should be implemented.

Regarding DR, it may involve some policies, tools and procedures to enable the recovery or continuation of vital technology infrastructure and systems following a natural or human-induced disaster. DR may focus on some information technology (IT) systems supporting critical business functions, and more particularly, keeping all essential aspects of a business functioning despite significant disruptive events. Although DR may be a solution to business continuity, some problems may occur. For example, there may be data security issues, since data transmission between the intranet and the world outside the intranet is typically required. For another example, the associated reconfiguration may be very complicated and time consuming. Thus, a novel method and associated architecture are required.

### Summary of the Invention

This in mind, the application aims at providing a method, an associated network storage server and associated storage system, in order to solve the problems mentioned above.

This is achieved by a method for providing network-based services and associated network storage server, could server, and method according to claims 1, 7, 11 and 13. The dependent claims pertain to corresponding further developments and improvements.

As will be seen more clearly from the detailed description following below, the claimed method includes: associating the network storage server with a virtual machine running at a disaster recovery site (DR site); replicating data associated with the network-based services from the network storage server to the virtual machine; configuring a first dynamic domain name system (DDNS) setting of a domain name system (DNS) server, wherein the first DDNS setting is arranged to map a public domain name to a public internet protocol (IP) address of the network storage server; configuring a first private DNS setting of a private DNS server, wherein the first private DNS setting is arranged to map a private domain name to a private network IP address of the network storage server; wherein when the network storage server is in a non-working status, the network-based services are recovered to the virtual machine running on the DR site by performing the following steps: triggering, by the virtual machine, a second DDNS setting of the DNS server, wherein the second DDNS setting is arranged to map the public domain name to a public IP address of the virtual machine; and triggering, by the virtual machine, a second private DNS setting of the private DNS server, wherein the second private DNS setting is arranged to map the private domain name to a virtual private network (VPN) IP address of the virtual machine.

In addition, the claimed network storage server includes a network interface circuit, a storage interface circuit a processing circuit. The network interface circuit is arranged to couple the network storage server to a router device through a wired or wireless connection, wherein the network storage server and the router device are within a local area network (LAN). The storage interface circuit is arranged to install at least one storage device at the network storage server, wherein the at least one storage device is arranged to store data of the user. The processing circuit is arranged to control operations of the network storage server. The network storage server is arranged to provide at least one network-based user interface, to allow the user to set multiple configurations regarding the set of network-based services, wherein the configurations comprises: a normal configuration for providing the set of network-based services from the network storage server to the user, wherein the normal configuration comprises a first private domain name system (DNS) setting of the router device, and the first private DNS setting is arranged to map a host name of the network storage server to an internet protocol (IP) address of the network storage server; and a failover configuration for providing the set of network-based services from a cloud server to the user, wherein the failover configuration comprises a disaster recovery (DR) plan for controlling the cloud server to trigger a second private DNS setting of the router device, and the second private DNS setting is arranged to map the host name of the network storage server to a virtual private network (VPN) client IP address of a virtual machine running on the cloud server. The network storage server is arranged to replicate the data of the user from the network storage server to the cloud server; and when the network storage server is operating normally and a client device held by the user is within the LAN, based on the normal configuration, the network storage server is arranged to be accessible by the client device through the router device having the first private DNS setting, to provide the set of network-based services from the network storage server to the user, wherein the set of network-based services comprises a file service. When the network storage server is not operating normally and the client device held by the user is within the LAN, based on the failover configuration, the cloud server controls the virtual machine running thereon to be accessible by the client device through the router device having the second private DNS setting, to provide at least one network-based service of the set of network-based services from the cloud server to the user, wherein the virtual machine running on the cloud server corresponds to the network storage server, and the at least one network-based service comprises the file service.

In addition, the claimed cloud server includes a network interface circuit, a storage interface circuit and a processing circuit. The network interface circuit is arranged to couple the cloud server to a network, wherein the network storage server and a router device are within a local area network (LAN), and the network is outside the LAN. The storage interface circuit is arranged to install at least one storage device at the cloud server, wherein the at least one storage device is arranged to store a replication version of data of the user. The processing circuit is arranged to control operations of the cloud server, and control the cloud server to run a virtual machine when needed. The network storage server is arranged to provide at least one network-based user interface, to allow the user to set multiple configurations regarding the set of network-based services, wherein the configurations comprises: a normal configuration for providing the set of network-based services from the network storage server to the user, wherein the normal configuration comprises a first private domain name system (DNS) setting of the router device, and the first private DNS setting is arranged to map a host name of the network storage server to an internet protocol (IP) address of the network storage server; and a failover configuration for providing the set of network-based services from the cloud server to the user, wherein the failover configuration comprises a disaster recovery (DR) plan for controlling the cloud server to trigger a second private DNS setting of the router device, and the second private DNS setting is arranged to map the host name of the network storage server to a virtual private network (VPN) client IP address of the virtual machine running on the cloud server. The network storage server is arranged to replicate the data of the user from the network storage server to the cloud server to generate the replication version of the data. When the network storage server is operating normally and a client device held by the user is within the LAN, based on the normal configuration, the network storage server is arranged to be accessible by the client device through the router device having the first private DNS setting, to provide the set of network-based services from the network storage server to the user, wherein the set of network-based services comprises a file service. When the network storage server is not operating normally and the client device held by the user is within the LAN, based on the failover configuration, the cloud server controls the virtual machine running thereon to be accessible by the client device through the router device having the second private DNS setting, to provide at least one network-based service of the set of network-based services from the cloud server to the user, wherein the virtual machine running on the cloud server corresponds to the network storage server, and the at least one network-based service comprises the file service.

In addition, another claimed method includes: utilizing the network storage server to provide at least one network-based user interface, to allow the user to set multiple configurations regarding the set of network-based services, wherein the configurations comprises: a normal configuration for providing the set of network-based services from the network storage server to the user, wherein the network storage server and a router device are within a local area network (LAN), the normal configuration comprises a first private domain name system (DNS) setting of the router device, and the first private DNS setting is arranged to map a host name of the network storage server to an internet protocol (IP) address of the network storage server; and a failover configuration for providing the set of network-based services from a cloud server to the user, wherein the failover configuration comprises a disaster recovery (DR) plan for controlling the cloud server to trigger a second private DNS setting of the router device, and the second private DNS setting is arranged to map the host name of the network storage server to a virtual private network (VPN) client IP address of a virtual machine running on the cloud server. The method further includes utilizing the network storage server to replicate data of the user from the network storage server to the cloud server; and when the network storage server is operating normally and a client device held by the user is within the LAN, based on the normal configuration, controlling the network storage server to be accessible by the client device through the router device having the first private DNS setting, to provide the set of network-based services from the network storage server to the user, wherein the set of network-based services comprises a file service; wherein when the network storage server is not operating normally and the client device held by the user is within the LAN, based on the failover configuration, the cloud server controls the virtual machine running thereon to be accessible by the client device through the router device having the second private DNS setting, to provide at least one network-based service of the set of network-based services from the cloud server to the user, wherein the virtual machine running on the cloud server corresponds to the network storage server, and the at least one network-based service comprises the file service.

### Brief Description of the Drawings

In the following, the invention is further illustrated by way of example, taking reference to the accompanying drawings. Thereof:
- Fig. 1: is a block diagram illustrating a network environment for migrating physical NAS operating system to DR site according to an embodiment of the present invention;
- Fig. 2: is a block diagram of a storage system according to an embodiment of the present invention, in which the storage system may operate according to a method for providing network-based services to a user of a network storage server;
- Fig. 3: illustrates a working flow of the method according to an embodiment of the present invention;
- Fig. 4: illustrates a control window of a replication wizard according to an embodiment of the present invention;
- Fig. 5: illustrates another control window of the replication wizard.
- Fig. 6: illustrates an example of an internal client access path in a normal control scheme of the method;
- Fig. 7: illustrates an example of an external client access path in the normal control scheme of the method;
- Fig. 8: illustrates an example of an internal client access path in a failover control scheme of the method;
- Fig. 9: illustrates an example of an external client access path in the failover control scheme of the method; and
- Fig. 10: illustrates an example of Disaster Recovery Software block diagram.

### Detailed Description

Disaster recovery (DR) of a NAS from one place to another typically needs reconfiguring network properties of the operating system of the NAS to match the network configuration of the recovery site. This reconfiguration is a very complicated and time consuming process, and can have negatively affect user experience. However, without a recovery plan, users and enterprises will expose themselves to the risks of data lost and business shut down due to unexpected disasters, such as flood, terrorist attack, war, earthquake, etc. The present invention method and architecture can provide an efficient and user-friendly way to establish a recovery plan to protect user's data and enterprises' digital assets. In addition, the present invention method and architecture can guarantee data security when initiating failover. For example, when failover to the cloud server occurs, the users can continue accessing various services that are originally available in the private network, in which the services can be provided from the cloud server to the users through a VPN connection as if the services are still provided from the private network. As a result, accessing the services from the cloud server is as safe as accessing the services from the private network, and data and privacy can be protected.

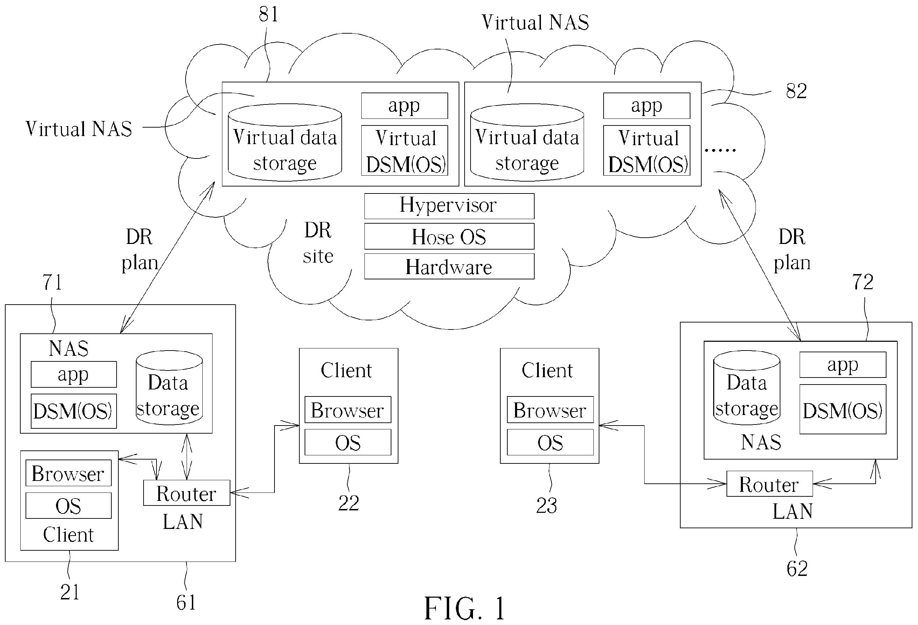

Fig. 1 is a block diagram illustrating a network environment for migrating physical NAS operating systems to a DR site. For example, the network environment may include one or more private networks such as a first private network and a second private network, in which the first private network may be a LAN 61 including at least one physical NAS (which may be referred to as NAS device, or NAS, for brevity) such as the NAS 71, and the second private network may be a LAN 62 including at least one physical NAS such as the NAS 72. Each of the NASs 71 and 72 includes an operating system (OS) such as a Disk Station Manager (DSM), and apps that provide various services to clients (or client devices), such as file sharing service, file management service, media entertainment service, mail server service, monitoring service, etc., and includes data storage (e.g. one or more hard disk drives (HDDs) and/or one or more solid state drives (SSDs)). The existing NASs 71 and 72 may include a disaster recovery (DR) plan which means to have a replicated OS on the DR site. There may be multiple client devices such as the client devices 21, 22, 23, etc., each of which may have its own OS and browser and may link to a NAS, for example, through a router. The DR site may include hardware, host OS, hypervisor, etc., and may run multiple virtual machines such as virtual NASs 81 and 82, which may be regarded as virtual versions of the NASs 71 and 72, respectively. Each of the virtual NASs 81 and 82 includes the OS (such as the virtual DSM), the apps, and the virtual data storage respectively corresponding to the OS (such as the DSM), the apps, and the data storage of the physical NAS being emulated thereby. The DR site is operated by or on behalf of a single organization, such as a NAS manufacturer.

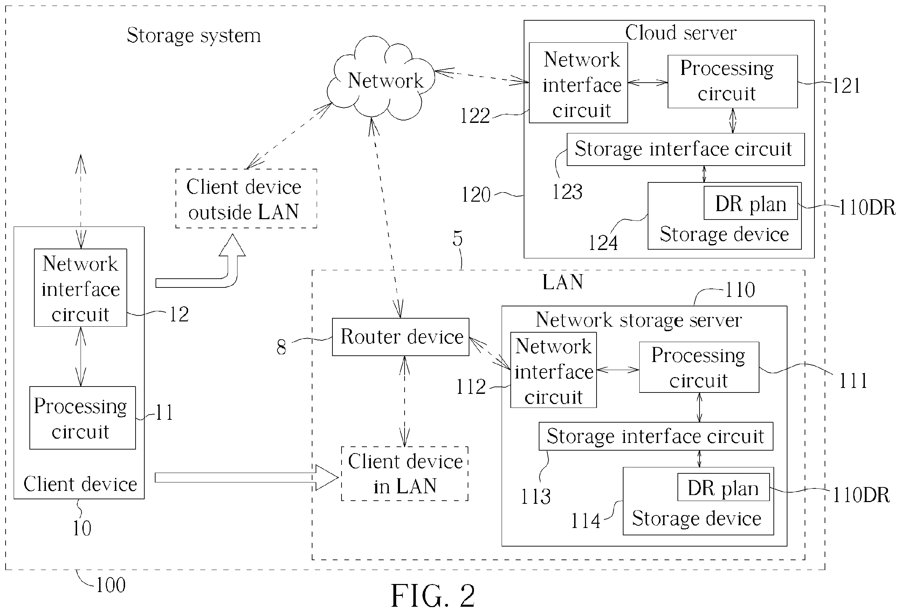

Fig. 2 is a block diagram of a storage system 100 according to an embodiment of the present invention, in which the storage system 100 may operate according to a method for providing network-based services (e.g. the aforementioned various services) to a user of a network storage server. The storage system 100 may include the network storage server 110, the router device 8, and the client device 10, and at least the router device 8 and the network storage server 110 are positioned within the LAN 5. The network storage server 110 includes the processing circuit 111 (e.g. at least one processor and associated circuit such as RAM, bus, chipset, etc.), the network interface circuit 112, the storage interface circuit 113, and the storage device 114 (e.g. the data storage), and a DR plan 110DR may be stored in the storage device 114. In addition, the cloud server 120 includes the processing circuit 121 (e.g. at least one processor and associated circuit such as RAM, bus, chipset, etc.), the network interface circuit 122, the storage interface circuit 123, and the storage device 124 (e.g. one or more HDDs and/or one or more SSDs). The client device 10 includes the processing circuit 11 (e.g. at least one processor and associated circuit such as RAM, bus, chipset, etc.) and the network interface circuit 12.

The network interface circuit 112 is arranged to couple the network storage server 110 to the router device 8 through a wired or wireless connection. The storage interface circuit 113 is arranged to install the storage device 114 at the network storage server 110, in which the at least one storage device is arranged to store data of the user. The processing circuit 111 is arranged to control operations of the network storage server 110. In addition, the network interface circuit 122 is arranged to couple the cloud server 120 to the network. The storage interface circuit 123 is arranged to install the storage device 124 at the cloud server 120, in which the storage device 124 may be arranged to store a replication version of data of the user. The processing circuit 121 is arranged to control operations of the cloud server 120, and control the cloud server 120 to run a virtual machine (e.g. any of the virtual machines, such as any of the virtual NASs 81 and 82) to emulate the network storage server 110 when needed. For example, the OS and the apps of the NAS may run on the processor within the processing circuit 111, the host OS and other program modules (e.g. the hypervisor, the virtual machines, etc.) may run on the processor within the processing circuit 121, and the combination of the hardware components in the cloud server 120 (e.g. the processing circuit 121, the network interface circuit 122, the storage interface circuit 123, and the storage device 124) may be regarded as the hardware shown in Fig. 1. The OS and the browser of the one of the clients may run on the processor within the processing circuit 11, and the user of the client device 10 may use user interface (UI) through the browser, to apply settings (e.g. the settings of the network-based services, the DR plan 110DR, etc.) to the network storage server 110. The router device 8 may be coupled to the cloud server 120 through at least one network (e.g. the Internet and/or the networks of one or more ISPs) which is outside the LAN 5, and the network storage server 110 may transmit the DR plan 110DR to the cloud server 120. As a result, the DR plan 110DR (or the copy thereof) may be stored in the storage device 124, for running the virtual machine.

In the architecture shown in Fig. 2, the client device 10 may be positioned in the LAN 5 (e.g., labeled "Client device in LAN"), or may be positioned outside the LAN 5 (e.g., labeled "Client device outside LAN"). Assume that the client device 10 is positioned in the LAN 5, in which the router device 8 may play a role of an access point that allows wireless connections. For example, when the network storage server 110 operates normally, the client device 10 may link to the network storage server 110 through the router device 8. For another example, when the network storage server 110 malfunctions, the client device 10 may link to the cloud server 120 through the router device 8 and the network. More particularly, when initiating failover, the cloud server 120 (e.g. the DR site) may establish a VPN tunnel with the router device 8 so that the client device 10 within the LAN 5 can connect to the cloud server 120 through the VPN tunnel. As a result, the virtual machine running on the cloud server 120 according to the DR plan 110DR may emulate the network storage server 110 and may continue providing at least one portion (e.g. a portion or all) of the network-based services. Assume that the client device 10 is positioned outside the LAN 5, in which there may be a mobile network within the network shown in Fig. 2. For example, when the network storage server 110 operates normally, the client device 10 may link to the network storage server 110 through the network and the router device 8. For another example, when the network storage server 110 malfunctions, the client device 10 may link to the cloud server 120 through the network. Similarly, the virtual machine running on the cloud server 120 according to the DR plan 110DR may emulate the network storage server 110 and may continue providing the aforementioned at least one portion of the network-based services.

Based on the architecture shown in Fig. 2, the network storage server 110, the cloud server 120, the router device 8, and the client device 10 are applicable to providing the network-based services to the user of the network storage server 110, in which the network storage server 110 may replicate the data of the user from the network storage server 110 to the cloud server 120. For example, the network storage server 110 may provide the network-based services to the user, and the cloud server 120 (e.g. the virtual machine running thereon according to the DR plan 110DR) may provide a set of network-based services to the user, in which the set of network-based services may include a portion or all of the aforementioned various services, depending on the DR plan 110DR corresponding to user settings. The set of network-based services may include at least one (e.g. one or more) file service, such as services of email, file access, etc. There may be multiple users of the network storage server 110 and they may carry their client devices and move around, respectively, so there may be internal and external clients. The network storage server 110 can provide the network-based services including the set of network-based services to the users at the same time. Similarly, the cloud server 120 (e.g. the virtual machine running thereon according to the DR plan 110DR) can provide the set of network-based services to the users at the same time.

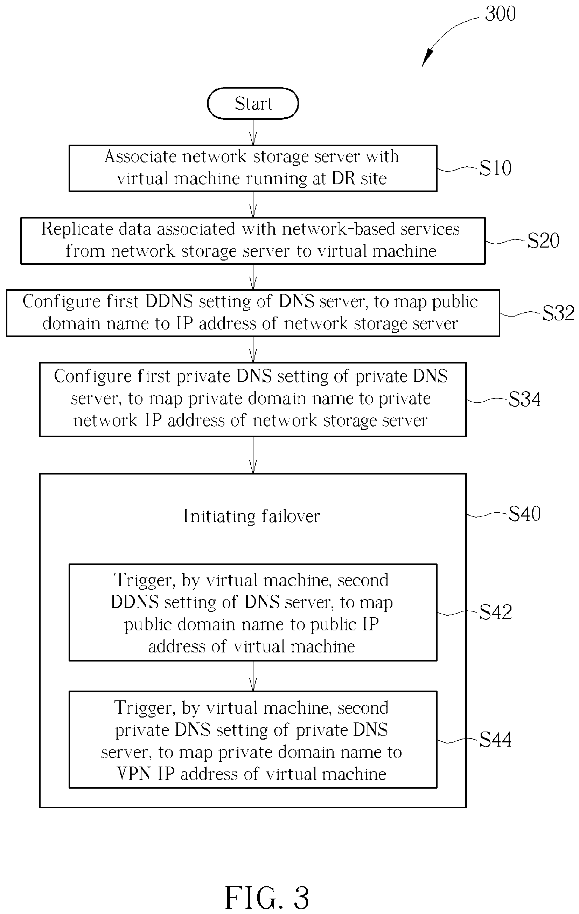

Fig. 3 illustrates a working flow 300 of the method according to an embodiment of the present invention. The working flow 300 may be applied to the architecture shown in Fig. 1, and may be applied to the storage system 100, and more particularly, the devices and servers in the architecture shown in Fig. 2, in which the network storage server 110 may be a server (e.g. a storage server) that is capable of providing the file service, and is not limited to a NAS device.

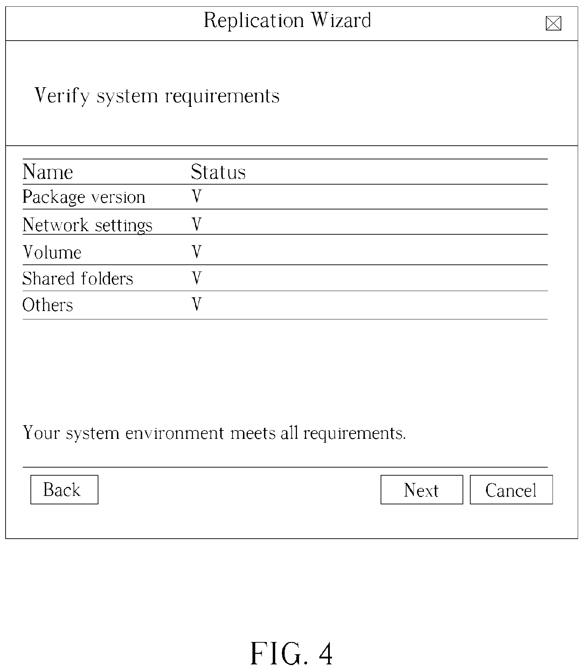

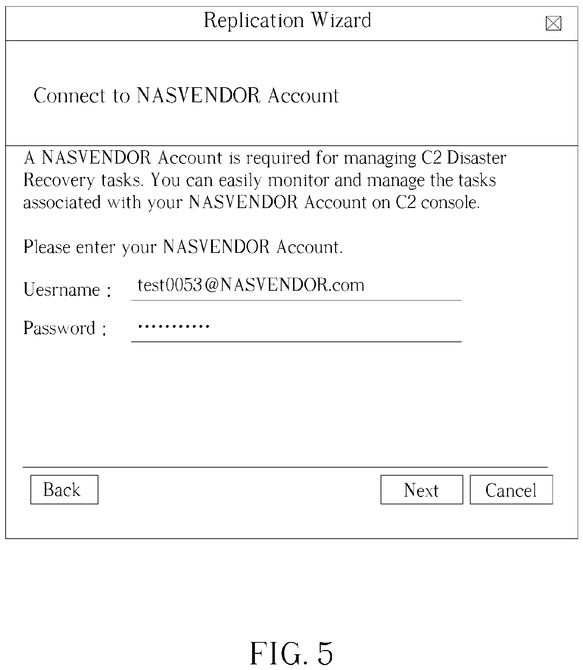

In Step S10, the processing circuit 111 may associate the network storage server 110 with a virtual machine running at the DR site (e.g. the cloud server 120), for example, the virtual machine running on the cloud server 120. According to this embodiment, the processing circuit 111 may establish a link between the network storage server 110 and the virtual machine running at the DR site, for example, the user may login to a predetermined account of the network storage server 110, and the processing circuit 121 may assign the virtual machine corresponding to the network storage server 110 for the user, for further DR usage. The login process may be carried out by a replication wizard having some control windows such as that shown in Figs. 4 and 5. The network storage server 110 may provide UI (e.g. browser-executable UI) of the replication wizard through the browser of the client device of the user. For example, referring to Fig. 4, the system requirements will be verified automatically. The system requirements include package version, network settings, volume, shared folders, and others. Network setting requirements include checking the connectivity of the DR site or checking whether there is any other incompatible setting. Volume and shared folders requirements are utilized for identifying whether there is a file can be replicated or not. The rest of requirements includes whether there is any incompatible settings or not (e.g. Internet Small Computer System Interface (iSCSI) logical unit number (LUN), iSCSI target, Secure Hash Algorithm (SHA), Lightweight Directory Access Protocol (LDAP)/domain).

In Step S20, the processing circuit 111 may trigger the network storage server 110 to replicate data associated with the network-based services from the network storage server 110 to the virtual machine. Examples of the data may include, but are not limited to: data of one or more specific services, such as that of the file transferring service or file editing service. In an embodiment, the processing circuit 111 may set up the replication schedule for the user. Taking Fig. 5 as an example, beginning preparing to bind the DR site to the physical NAS, an account (which may already be registered in the NAS vendor's cloud server who may also maintain the DR site) can be entered here, and the processing circuit 111 may communicate with the DR site to verify the account. For better comprehension, the email address shown in Fig. 5 and the text contents above it may be taken as examples of the account and associated hint information, in which "NASVENDOR" may represent the name of the NAS vendor. After the verification, the DR site can be aware of which physical machine is the target NAS.

After binding the NAS to the DR site, the processing circuit 111 may automatically calculate the needed space on the DR site for the physical NAS. For example, regarding calculating the needed space, the storage space in the DR site may be determined in unit of TB (Terabyte). As a result, if the physical site (e.g. the physical NAS) is ranged from 0 to 1 TB, the DR site may allocate 1 TB space for the physical site. However, the file system may need to store some metadata, so the calculating rule may be adjusted as follow:
*when the physical site is ranged from 0 to 0.475 TB(Terabyte), the DR site may allocate 0.5 TB for it;*
*when the physical site is ranged from 0.475 to 0.95 TB, the DR site may allocate 1 TB for it;*
Next, the replication schedule can be determined by the processing circuit 111, which can provide a default setting and also provide some setting choices for users.

In Step S32, the first DDNS setting of the DNS server is configured to map the public domain name of the network storage device 110 to a public IP address of the network storage server 110, in which the first DDNS setting is arranged to perform this mapping operation. In an embodiment, the manufacturer of the network storage device 110 may provide the service of DDNS setting, but the present invention is not limited thereto. Other parties other than the NAS vendor can also provide the service of the DDNS setting. After the first DDNS setting is complete, the processing circuit 111 will update the public IP address of the network storage server 110 to the DDNS service provider automatically (the public IP address of the network storage server 110 may change from time to time). Furthermore, the domain name of network storage server 110 and the information of the DDNS service provider are replicated to the cloud server 120 by the processing circuit 111 automatically after step S32 is complete. The example of the information of the DDNS service provider may include IP address, authentication information, and name of the DDNS service provider. By doing so, the cloud server 120 can update its public IP address to the DDNS service provider when initiating failover so that the client device 10 may connect to the cloud server 120. The user has no need to know the IP address of either the network storage server 110 or the cloud server.

In embodiments, the public domain name of the network storage device 110 can be used for the external clients, and is therefore named with "public", but the present invention is not limited thereto. The internal clients may also use the public domain name to connect the network storage server 110.

In Step S34, the first private DNS setting of the private DNS server is configured within the router device 8, to map a private domain name of the network storage server 110 to the private network IP address of the network storage server 110, in which the first private DNS is arranged to perform this mapping operation. In an embodiment, the router device 8 may provide the service of the private DNS setting. However, in order to use LAN 5 to access the cloud server 120 on DR site, a VPN connection is required for data security. Once the network storage server 110 has been switched over to the cloud server 120, a VPN connection will be automatically established to allow the client device within the LAN to access data on the cloud server 120 through a file service protocol. The file service protocol in this embodiment is a protocol that used within LAN environment, and is not suitable to be used external to the LAN in conventional art because of the security issue. By establishing the VPN connection between the cloud serer 120 and the router device 8, the client device within the LAN 5 can access the data and services provided by the cloud serer 120 through the file service protocol, and it is as safe as accessing the services from the private network. In an embodiment, the file service protocol may be implemented by Samba, AFP, but the present application is not limited thereto. In an embodiment, the processing circuit 111 may set up the VPN setting, so the DR site may link to the VPN server when needed. More specifically, the VPN setting may include the IP address of the VPN server. In an embodiment, the VPN connection can be implemented by using L2TP/lPsec or OpenVPN method, but the present application is not limited thereto.

In an embodiment, the processing circuit 111 may set the firewall rules. One or more specific services can be selected to enable those services on the DR site. More specifically, when initiating the DR plan, in addition to the OS configuration data, the files and the configuration data of the selected services will be also replicated to the DR site. After the final setting, the UI of the replication wizard may summarize the setting to the user to make a final confirmation.

In Step S40, a failover operation is initiated. That is, when the network storage server 110 is in a non-working status (e.g. the network storage server 110 is not operating normally), the network-based services are recovered to the virtual machine running on the DR site. In an embodiment, the network storage server 110 may communicate to the cloud server 120 periodically to determine whether the network storage server 110 operates normally or not. For example, the network storage server 110 may send a survival signal to the cloud server 120 periodically. Once the cloud server 120 fails to receive the survival signal in a period of time, the cloud server 120 may trigger a series of steps (for example, step S42 and step S44) to provide the services and data that are originally provided by the network storage server 110. In another example, the network storage server 110 may detect its own operation condition. If a volume crash event is detected or at least a portion of the services of the network storage server 110 fails, the network storage server 110 may send a recovery request to the cloud server 120. Once the cloud server 120 receives the recovery request, the cloud server 120 may trigger a series of steps to provide the services and data that are originally provided by the network storage server 110. In yet another example, there may be an intermediate server utilized for determine whether the network storage server 110 operates normally or not. The intermediate server is positioned external to the LAN 5, and is used to communicate between the network storage server 110 and the cloud server 120. The intermediate server may detect the DDNS service and the VPN connection of the network storage server 110 periodically. If the intermediate server cannot connect to the network storage server 110 through the DDNS service and the VPN connection, the intermediate server may send a recovery request to the cloud server 120 to recovery the services and data that are originally provided by the network storage server 110.

In Step S42, the processing circuit 121 may trigger, by utilizing the virtual machine, the second DDNS setting of the DNS server, to map the public domain name of the network storage device 110 to a public IP address of the virtual machine, in which the second DDNS setting is arranged to perform this mapping operation. For example, the virtual machine may update the IP address for this mapping operation in the DNS server, and this may be done without complicated settings whenever the network storage server 110 is in the non-working status so that the client device can connect to the virtual machine use the public domain name of the network storage device 110.

In Step S44, the processing circuit 121 may trigger, by utilizing the virtual machine, the second private DNS setting of the private DNS server, to map the private domain name of the network storage device 110 to a VPN IP address of the virtual machine, in which the second private DNS setting is arranged to perform this mapping operation. For example, the virtual machine may update the IP address for this mapping operation in the private DNS server. Afterward, the client device within the LAN 5 may connect to the cloud server 120 by using the private domain, and the VPN connection can ensure the data security between the cloud server 120 and the network storage device 110. By doing this, the data and services originally provided by the network storage device 110 can be seamless provided by the virtual machine (the cloud server 120).

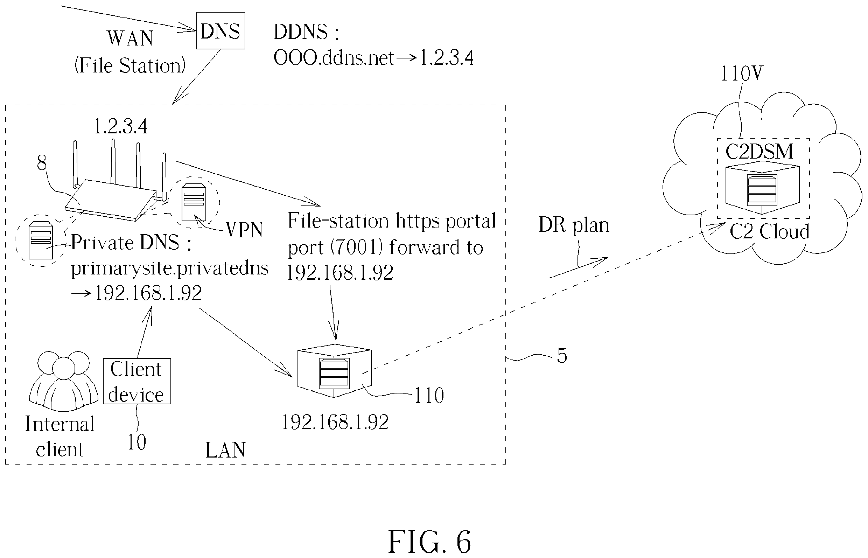

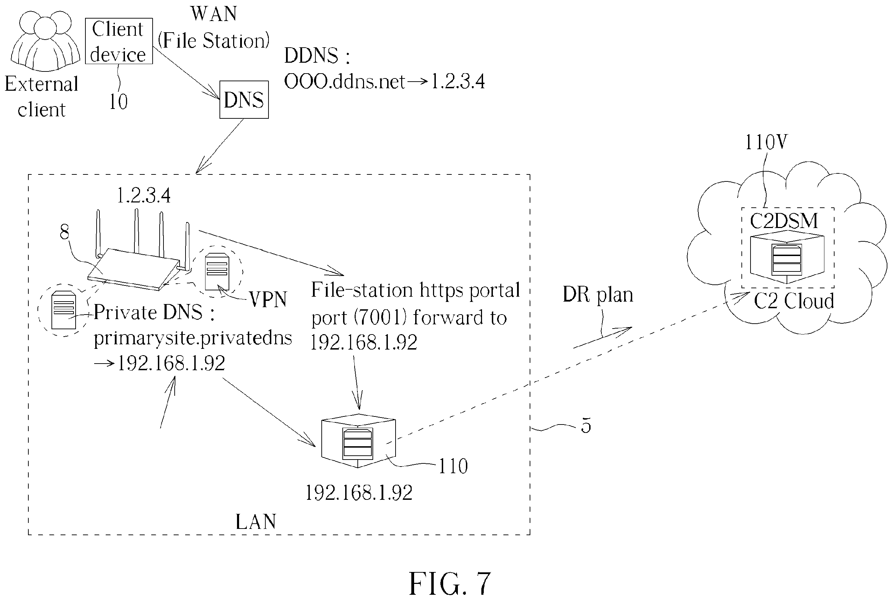

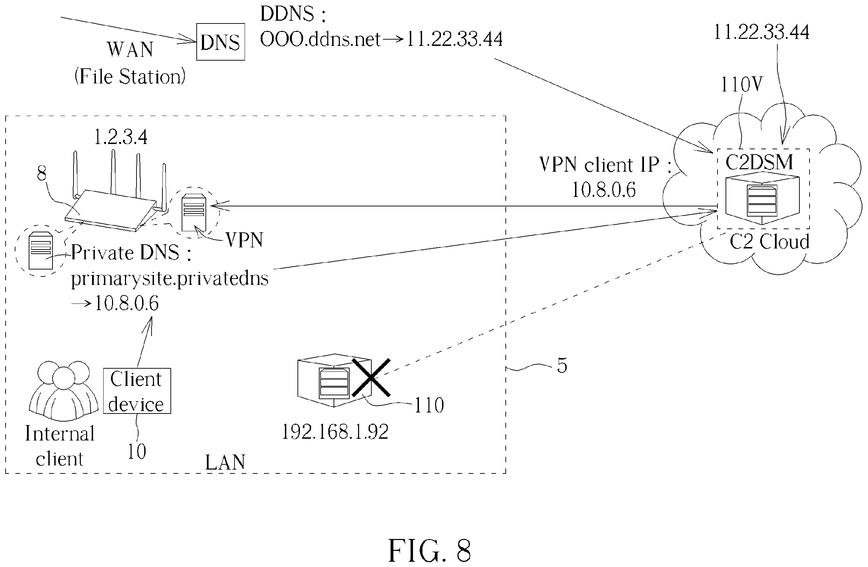

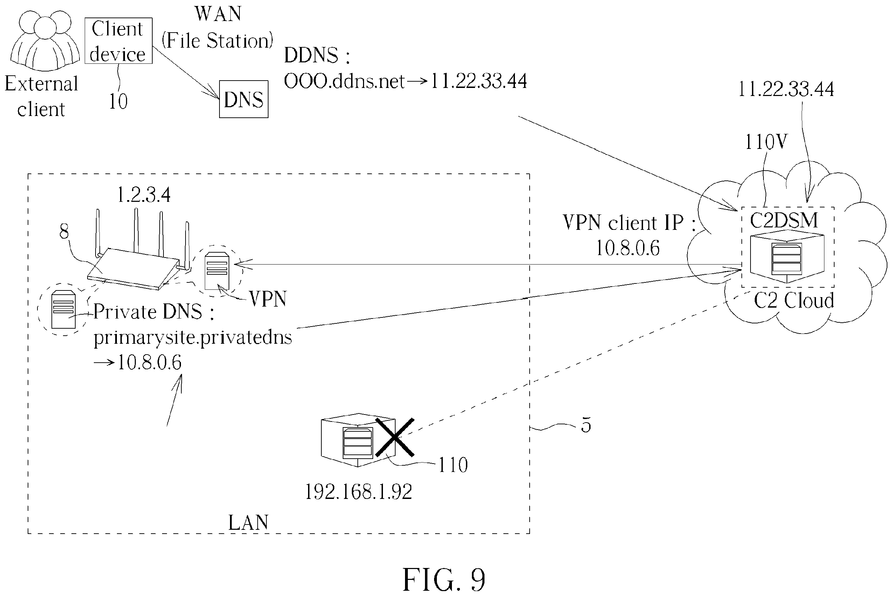

Fig. 6 and Fig. 7 illustrate examples of an internal client access path and an external client access path in a normal control scheme of the method, respectively, and Fig. 8 and Fig. 9 illustrate examples of an internal client access path and an external client access path in a failover control scheme of the method, respectively. The client device 10 may be an internal client (e.g. any of the clients in the LAN 5) in each of Fig. 6 and Fig. 8. The client device 10 may be an external client (e.g. any of the clients outside the LAN 5) in the example of each of Fig. 7 and Fig. 9. The cloud named "C2 cloud" can be taken as an example of the cloud server 120, the virtual machine 110V can be taken as an example of the virtual machine running on the cloud server 120 according to the DR plan 110DR, and the DSM named "C2DSM" can be taken as an example of the OS (e.g. the virtual DSM) in the virtual machine. The router device 8, the network storage server 110, and the virtual machine 110V may have the IP addresses 1.2.3.4, 192.168.1.92, and 11.22.33.44, respectively, in which the IP addresses 1.2.3.4 and 11.22.33.44 may be regarded as public IP addresses; and when the external client is in the network such as the wide area network (WAN), the external client may access the network storage server 110 or the cloud server to obtain the file service (such as that named "File Station") for the user; but the present invention is not limited thereto.

For better comprehension, some steps of the working flow 300 may be described with reference to the architecture shown in one or more of Figs. 6-9. Regarding Step S32, the processing circuit 111 may configure the first DDNS setting of the DNS server (e.g. the DNS server labeled "DNS" in any of Figs. 6-7), to map the public domain name of the network storage device 110 to a public IP address of the network storage server 110 (e.g. a combination of the IP address 1.2.3.4 and the portal port 7001, such as 1.2.3.4:7001, which is arranged to be translated to the IP address 192.168.1.92 of the network storage server 110. Regarding Step S34, the processing circuit 111 may configure the first private DNS setting of the private DNS server within the router device 8 (e.g. the private DNS server labeled "Private DNS" in any of Figs. 6-7), to map a private domain name of the network storage server 110 to the private network IP address of the network storage server 110 (e.g. the IP address 192.168.1.92). Regarding Step S42, the processing circuit 121 may trigger, by utilizing the virtual machine, the second DDNS setting of the DNS server (e.g. the DNS server labeled "DNS" in any of Figs. 8-9), to map the public domain name of the network storage device 110 to a public IP address of the virtual machine (e.g. the public IP address 11.22.33.44 of the virtual machine 110V). Regarding Step S44, the processing circuit 121 may trigger, by utilizing the virtual machine, the second private DNS setting of the private DNS server (e.g. the private DNS server labeled "Private DNS" in any of Figs. 8-9), to map the private domain name of the network storage device 110 to a VPN IP address of the virtual machine (e.g. the VPN client IP address 10.8.0.6 of the virtual machine 110V).

In addition, the network storage server 110 may provide at least one network-based UI (e.g. browser-executable UI), such as the UI of the replication wizard, to allow the user to set multiple configurations regarding the set of network-based services. The configurations may include a normal configuration (which may correspond to the normal control scheme) for providing the network-based services including the set of network-based services from the network storage server to the user, and further include a failover configuration (which may correspond to the failover control scheme) for providing the set of network-based services from the cloud server 120 such as the C2 cloud (more particularly, from the virtual machine 110V) to the user.

The normal configuration may include a first private DNS setting of the router device 8, such as that of a private DNS server (labeled "Private DNS" in any of Figs. 6-9) within the router device 8, in which the router device 8 may include a private DNS module (not shown) acts as the private DNS server, and the private DNS module may provide the associated private DNS function. For example, the first private DNS setting may include the setting of "primarysite.privatedns → 192.168.1.92" shown in Figs. 6-7, and the first private DNS setting is arranged to map the host name of the network storage server 110 (e.g. the host name primarysite.privatedns) to the IP address 192.168.1.92 of the network storage server 110. In addition, the failover configuration may include a DR plan (e.g. the DR plan 110DR) for controlling the cloud server 120 such as the C2 cloud to trigger a second private DNS setting of the router device 8. For example, the second private DNS setting may include the setting of "primarysite.privatedns → 10.8.0.6" shown in Figs. 8-9, and the second private DNS setting is arranged to map the host name of the network storage server to a VPN client IP address (e.g. the VPN client IP, such as 10.8.0.6) of the virtual machine 110V running on the cloud server 120 such as the C2 cloud. The router device 8 may include a VPN module (not shown) acts as a VPN server (labeled "VPN"), and the VPN module may provide the associated VPN function, to allow the virtual machine 110V to be added into the LAN 5.

When the network storage server 110 is operating normally and the client device 10 held by the user is within the LAN 5, based on the normal configuration, the network storage server 110 is arranged to be accessible by the client device 10 through the router device 8 (e.g. the private DNS server therein) having the first private DNS setting (e.g. the setting of "primarysite.privatedns → 192.168.1.92" shown in Fig. 6), to provide the set of network-based services from the network storage server 110 to the user. When the network storage server 110 is not operating normally and the client device 10 held by the user is within the LAN 5, based on the failover configuration, the cloud server 120 such as the C2 cloud controls the virtual machine 110V running thereon to be accessible by the client device 10 through the router device 8 (e.g. the private DNS server therein) having the second private DNS setting (e.g. the setting of "primarysite.privatedns → 10.8.0.6" shown in Fig. 8), to provide at least one network-based service (which may include the file service) of the set of network-based services from the cloud server such as the C2 cloud to the user, in which the virtual machine 110V running on the cloud server 120 such as the C2 cloud corresponds to the network storage server 110.

The normal configuration may further include a first DDNS setting of a DNS server (labeled "DNS" in any of Figs. 6-9) and a forward setting of the router device 8. For example, the first DDNS setting may include the setting of "DDNS" shown in Figs. 6-7, such as that of "OOO.ddns.net → 1.2.3.4" in which "OOO" may represent a predetermined name on a "ddns.net" server. In an embodiment, a manufacturer of the network storage server 110 may provide the DDNS service, but the present application is not limited thereto. The first DDNS setting is arranged to map the public domain name (e.g. OOO.ddns.net) of the network storage device 110 to the IP address 192.168.1.92 of the network storage server 110 through the router device 8, and the forward setting is arranged to provide a portal port (e.g. 7001) for forwarding to the IP address 192.168.1.92 of the network storage server 110. Regarding the failover configuration, the DR plan may be further arranged for controlling the cloud server 120 such as the C2 cloud to trigger a second DDNS setting of the DNS server (labeled "DNS"). For example, the second DDNS setting may include the setting of "DDNS" shown in Figs. 8-9, such as that of "OOO.ddns.net → 11.22.33.44". The second DDNS setting is arranged to map the public domain name of the network storage device 110 to the public IP address 11.22.33.44 of the virtual machine 110V running on the cloud server 120 such as the C2 cloud.

When the network storage server 110 is operating normally and the client device 10 held by the user is in the network (e.g. the WAN) outside the LAN 5, based on the normal configuration, the network storage server 110 is arranged to be accessible by the client device 10 through the DNS server (labeled "DNS") having the first DDNS setting (e.g. the setting of "DDNS" shown in Fig. 7, such as that of "OOO.ddns.net → 1.2.3.4", and the router device 8 having the forward setting (e.g. the setting of forwarding from the portal port 7001 to the IP address 192.168.1.92 where "File-station https portal port (7001) may forward to a network-based service such as file accessing service), to provide the set of network-based services from the network storage server to the user, in which a hypertext transfer protocol secure (https) request from the client device 10 may carry the port number of the portal port. When the network storage server 110 is not operating normally and the client device 10 held by the user is in the network (e.g. the WAN) outside the LAN 5, based on the failover configuration, the cloud server 120 such as the C2 cloud controls the virtual machine 110V running thereon to be accessible by the client device 10 through the DNS server (labeled "DNS") having the second DDNS setting (e.g. the setting of "DDNS" shown in Fig. 9, such as that of "OOO.ddns.net → 11.22.33.44"), to provide the aforementioned at least one network-based service from the cloud server 120 to the user.

According to some embodiments, the network storage server 110 may be implemented with a NAS device such as that shown in Fig. 1, in which a predetermined OS (e.g. the DSM) running on the NAS device may control the NAS device to provide the set of network-based services. The DR plan 110DR may be arranged to control the cloud server 120 to install the predetermined OS at the virtual machine, to make the virtual machine running on the cloud server 120 correspond to the network storage server 110. The DR plan 110DR may be further arranged to control the cloud server 120 to apply a database setting related to the file service to the virtual machine, to make the virtual machine running on the cloud server 120 correspond to the network storage server 110. For example, the set of network-based services may include a mail service, and the DR plan 110DR may be arranged to control the cloud server 120 to apply a mail setting related to the mail service to the virtual machine, to make the virtual machine running on the cloud server 120 correspond to the network storage server 110.

According to some embodiments, the method and the associated apparatus (e.g. a storage system including one or more of the router device 8, the client device 10, the network storage server 110, and the cloud server 120, such as any combination of the devices and servers in the architecture shown in Fig. 2, for example, the storage system 100) can greatly enhance the efficiency of DR-related setting and processing.

According to some embodiments, the network-based services may include a first subset of the network-based services that is accessible through the LAN 5 where the network storage server 110 is located, and the second private DNS setting may be arranged to access the first subset of the network-based services through the private domain name within the LAN 5. For example, the first subset of the network-based services may include some services that should be accessed within the LAN 5. The client device outside the LAN 5 cannot access the first subset of the network-based services because of the security issue. In an embodiment, the first subset of the network-based services may be provided by some file service protocols that designed to be used with the LAN 5. In an embodiment, such file service protocols may be implemented by Samba, AFP. During failover, as the virtual machine linked to the VPN server may be regarded as being added into the LAN 5, the internal clients can obtain the first subset of the network-based services through VPN for the users. The internal clients are not limited to obtain the first subset of the network-based services, but can obtain all of the network-based services for the users. As the first subset of the network-based services can be accessible only through the internal network such as the LAN 5, the present invention method and apparatus can guarantee data security.

In addition, the network-based services may include a second subset of the network-based services that can be accessed through the network outside the LAN 5 where the network storage server 110 is located, and the second DDNS setting of the DNS server is arranged to access the second subset of the network-based services through the network outside the LAN 5. As the external clients can merely obtain a portion (e.g. the second subset) of the network-based services, rather than all of the network-based services, the present invention can guarantee data security. In an embodiment, the second subset of the network-based services may include mail service.

In some embodiments, the second private DNS setting may be arranged to access the first subset of the network-based services provided by the virtual machine 110V outside the LAN 5. As the internal client device should be able to obtain all of the network-based services, the second private DNS setting can direct the request from the client device to the virtual machine 110V.

According to some embodiments, the network-based services may include a subset of the network-based services that is inaccessible through the network outside the LAN 5 where the network storage server 110 is located, and the first private DNS setting may be arranged to access this subset of the network-based services provided by the network storage server 110 within the LAN 5. When the network storage server 110 is operating normally, the internal clients may obtain this subset of the network-based services (e.g. some file transferring services) for the users through the private DNS server, in which the private DNS server is arranged to be used by the internal clients, rather than the external clients, to guarantee data security.

According to some embodiments, the network-based services include a subset of the network-based services that is accessible through a network, such as the second subset of the network-based services that is accessible through the network. The first DDNS settings of the DNS server may be arranged to access this subset (e.g. the second subset) of the network-based services provided by the network storage server 110, and the second DDNS setting of the DNS server may be arranged to access this subset (e.g. the second subset) of the network-based services provided by the virtual machine (e.g. the virtual machine 110V). As a result, the present invention method and apparatus can provide seamless services such as this subset (e.g. the second subset) of the network-based services.

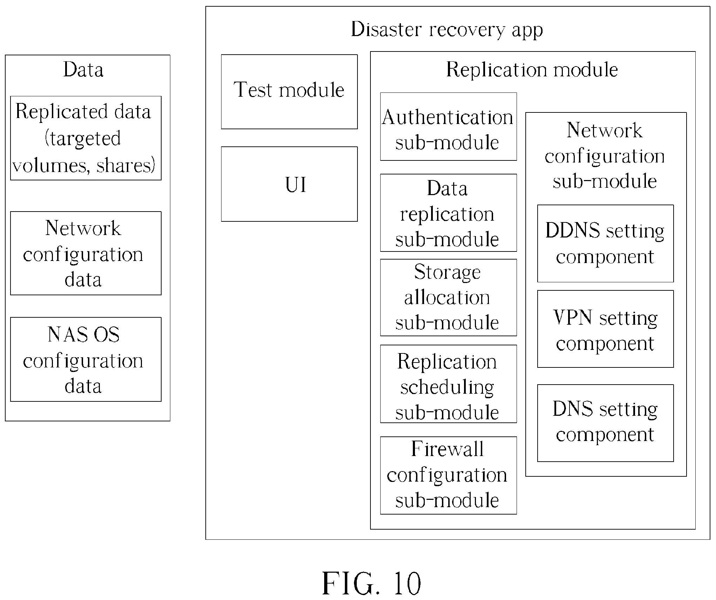

Fig. 10 illustrates an example of Disaster Recovery Software block diagram. The Disaster Recovery App includes some program modules of the NAS, such as the UI of the replication wizard, the test module, and the replication module including the authentication sub-module, the data replication sub-module, the storage allocation sub-module, the replication scheduling sub-module, the firewall configuration sub-module, and the network configuration sub-module (which includes the DDNS setting component, the VPN setting component, and the DNS setting component), and the associated data includes replicated data (e.g. target volumes, shares, etc.), network configuration data, and NAS OS configuration data. The UI may include the browser-executable UI, which may be implemented as some control windows such as that shown in Figs. 4 and 5. The test module can perform test operations, for example, test failover environment to determine whether the DR plan works. The replication module may handle operations of the Disaster Recovery App with the sub-modules. More details about how the Disaster Recovery App works may be described as follows, but the present invention is not limited thereto.

The replication module running on the processing circuit 111 may provide the UI that allows the user to set up the NAS through a client device which is linking to the NAS. First, the user may click a button of Create Replication in the UI. When a request of creating replication is identified through the UI, the replication wizard provided by the replication module will pop up on the screen of the client device, for the user to set up using a series of control windows of the replication wizard. For example, the replication scheduling sub-module can set up the replication schedule for the user, the authentication sub-module can communicate with the DR site to verify the account, and the storage allocation sub-module can automatically calculate the needed space on the DR site for the physical NAS. In addition, the replication scheduling sub-module can determine the replication schedule, and can provide the default setting and also provide the associated setting choices for the users. Based on the replication schedule, the data replication sub-module can perform data replication from the NAS to the DR site. Additionally, the network configuration sub-module can perform network configuration setting. For example, the DDNS setting component can automatically find out the registered DDNS of the NAS, and can access the DDNS information stored in the network configuration data, the VPN setting component can set up the VPN server for the user, to allow the DR site to link to the VPN server when needed, and the DNS setting component can set up the private DNS server (e.g. configure the private DNS setting of the private DNS server). Furthermore, the firewall configuration sub-module can perform firewall configuration setting, in which the firewall rules can be set through the firewall configuration sub-module.

## Claims

1. A method for providing network-based services to a user of a network storage server (110), **characterized in that** the method comprises:
associating the network storage server (110) with a virtual machine running at a disaster recovery site, hereinafter DR site;
replicating data associated with the network-based services from the network storage server (110) to the virtual machine;
configuring a first dynamic domain name system, hereinafter DDNS, setting of a domain name system server, hereinafter DNS server, wherein the first DDNS setting is arranged to map a public domain name to a public internet protocol, hereinafter IP, address of the network storage server (110);
configuring a first private DNS setting of a private DNS server, wherein the first private DNS setting is arranged to map a private domain name to a private network IP address of the network storage server (110);
wherein when the network storage server (110) is in a non-working status, the network-based services are recovered to the virtual machine running on the DR site by performing the following steps:
triggering, by the virtual machine, a second DDNS setting of the DNS server, wherein the second DDNS setting is arranged to map the public domain name to a public IP address of the virtual machine; and
triggering, by the virtual machine, a second private DNS setting of the private DNS server, wherein the second private DNS setting is arranged to map the private domain name to a virtual private network, hereinafter VPN, IP address of the virtual machine.

2. The method of claim 1, **characterized in that** the network-based services comprise a first subset of the network-based services that is accessible through a local area network, hereinafter LAN, where the network storage server (110) located, and the second private DNS setting is arranged to access the first subset of the network-based services through the private domain name within the LAN.

3. The method of claim 1, **characterized in that** the network-based services comprise a second subset of the network-based services that is accessible through a network outside a local area network, hereinafter LAN, where the network storage server (110) located, and the second DDNS setting of the DNS server is arranged to access the second subset of the network-based services through the network outside the LAN.

4. The method of claim 1, **characterized in that** the network-based services comprise a first subset of the network-based services that is accessible through a local area network, hereinafter LAN, where the network storage server (110) located, and the second private DNS setting is arranged to access the first subset of the network-based services provided by the virtual machine outside the LAN.

5. The method of claim 1, **characterized in that** the network-based services comprise a first subset of the network-based services that is inaccessible through a network outside a local area network, hereinafter LAN, where the network storage server (110) located, and the first private DNS setting is arranged to access the first subset of the network-based services provided by the network storage server (110) within the LAN.

6. The method of claim 1, **characterized in that** the network-based services comprise a second subset of the network-based services that is accessible through a network, and the first DDNS settings of the DNS server is arranged to access the second subset of the network-based services provided by the network storage server (110), and the second DDNS setting of the DNS server is arranged to access the second subset of the network-based services provided by the virtual machine.

7. A network storage server (110), applicable to providing a set of network-based services to a user of the network storage server (110), **characterized in that** the network storage server (110) comprises:
a network interface circuit (112), arranged to couple the network storage server (110) to a router device through a wired or wireless connection, wherein the network storage server (110) and the router device are within a local area network, hereinafter LAN;
a storage interface circuit (113), arranged to install at least one storage device at the network storage server (110), wherein the at least one storage device is arranged to store data of the user; and
a processing circuit (111), arranged to control operations of the network storage server (110), wherein:
the network storage server (110) is arranged to provide at least one network-based user interface, to allow the user to set multiple configurations regarding the set of network-based services, wherein the configurations comprises:
a normal configuration for providing the set of network-based services from the network storage server (110) to the user, wherein the normal configuration comprises a first private domain name system, hereinafter DNS, setting of the router device, and the first private DNS setting is arranged to map a host name of the network storage server (110) to an internet protocol (IP) address of the network storage server (110); and
a failover configuration for providing the set of network-based services from a cloud server (120) to the user, wherein the failover configuration comprises a disaster recovery plan, hereinafter DR plan, for controlling the cloud server (120) to trigger a second private DNS setting of the router device, and the second private DNS setting is arranged to map the host name of the network storage server (110) to a virtual private network, hereinafter VPN, client IP address of a virtual machine running on the cloud server (120);
the network storage server (110) is arranged to replicate the data of the user from the network storage server (110) to the cloud server (120); and
when the network storage server (110) is operating normally and a client device held by the user is within the LAN, based on the normal configuration, the network storage server (110) is arranged to be accessible by the client device through the router device having the first private DNS setting, to provide the set of network-based services from the network storage server (110) to the user, wherein the set of network-based services comprises a file service;
wherein when the network storage server (110) is not operating normally and the client device held by the user is within the LAN, based on the failover configuration, the cloud server (120) controls the virtual machine running thereon to be accessible by the client device through the router device having the second private DNS setting, to provide at least one network-based service of the set of network-based services from the cloud server (120) to the user, wherein the virtual machine running on the cloud server (120) corresponds to the network storage server (110), and the at least one network-based service comprises the file service.

8. The network storage server (110) of claim 7, **characterized in that** the network storage server (110) is implemented with a network-attached storage device, hereinafter NAS device, and a predetermined operating system, hereinafter OS, running on the NAS device controls the NAS device to provide the set of network-based services; and the DR plan (110DR) is further arranged for controlling the cloud server (120) to install the predetermined OS at the virtual machine, to make the virtual machine running on the cloud server (120) correspond to the network storage server (110).

9. The network storage server (110) of claim 7 or 8, **characterized in that** the DR plan (110DR) is further arranged for controlling the cloud server (120) to apply a database setting related to the file service to the virtual machine, to make the virtual machine running on the cloud server (120) correspond to the network storage server (110).

10. The network storage server (110) of claim 9, **characterized in that** the set of network-based services further comprises a mail service, and the at least one network-based service further comprises the mail service; and the DR plan (110DR) is further arranged for controlling the cloud server (120) to apply a mail setting related to the mail service to the virtual machine, to make the virtual machine running on the cloud server (120) correspond to the network storage server (110).

11. A cloud server (120), applicable to providing a set of network-based services to a user of a network storage server (110), **characterized in that** the cloud server (120) comprises:
a network interface circuit (112), arranged to couple the cloud server (120) to a network, wherein the network storage server (110) and a router device are within a local area network, hereinafter LAN, and the network is outside the LAN;
a storage interface circuit (113), arranged to install at least one storage device at the cloud server (120), wherein the at least one storage device is arranged to store a replication version of data of the user; and
a processing circuit (111), arranged to control operations of the cloud server (120), and control the cloud server (120) to run a virtual machine when needed, wherein:
the network storage server (110) is arranged to provide at least one network-based user interface, to allow the user to set multiple configurations regarding the set of network-based services, wherein the configurations comprises:
a normal configuration for providing the set of network-based services from the network storage server (110) to the user, wherein the normal configuration comprises a first private domain name system, hereinafter DNS setting of the router device, and the first private DNS setting is arranged to map a host name of the network storage server (110) to an internet protocol (IP) address of the network storage server (110); and
a failover configuration for providing the set of network-based services from the cloud server (120) to the user, wherein the failover configuration comprises a disaster recovery (DR) plan for controlling the cloud server (120) to trigger a second private DNS setting of the router device, and the second private DNS setting is arranged to map the host name of the network storage server (110) to a virtual private network (VPN) client IP address of the virtual machine running on the cloud server (120);
the network storage server (110) is arranged to replicate the data of the user from the network storage server (110) to the cloud server (120) to generate the replication version of the data; and
when the network storage server (110) is operating normally and a client device held by the user is within the LAN, based on the normal configuration, the network storage server (110) is arranged to be accessible by the client device through the router device having the first private DNS setting, to provide the set of network-based services from the network storage server (110) to the user, wherein the set of network-based services comprises a file service;
wherein when the network storage server (110) is not operating normally and the client device held by the user is within the LAN, based on the failover configuration, the cloud server (120) controls the virtual machine running thereon to be accessible by the client device through the router device having the second private DNS setting, to provide at least one network-based service of the set of network-based services from the cloud server (120) to the user, wherein the virtual machine running on the cloud server (120) corresponds to the network storage server (110), and the at least one network-based service comprises the file service.

12. The network storage server (110) of claim 7 or the cloud server (120) of claim 11, **characterized in that** the normal configuration further comprises a first dynamic DNS, hereinafter DDNS setting of a DNS server and a forward setting of the router device, wherein the first DDNS setting is arranged to map a public domain name of the network storage device to the IP address of the network storage server (110) through the router device, and the forward setting is arranged to provide a portal port for forwarding to the IP address of the network storage server (110); and when the network storage server (110) is operating normally and the client device held by the user is in a network outside the LAN, based on the normal configuration, the network storage server (110) is arranged to be accessible by the client device through the DNS server having the first DDNS setting and the router device having the forward setting, to provide the set of network-based services from the network storage server (110) to the user.

13. A method for providing a set of network-based services to a user of a network storage server (110), **characterized in that** the method comprises:
utilizing the network storage server (110) to provide at least one network-based user interface, to allow the user to set multiple configurations regarding the set of network-based services, wherein the configurations comprises:
a normal configuration for providing the set of network-based services from the network storage server (110) to the user, wherein the network storage server (110) and a router device are within a local area network, hereinafter LAN, the normal configuration comprises a first private domain name system, hereinafter DNS setting of the router device, and the first private DNS setting is arranged to map a host name of the network storage server (110) to an internet protocol, hereinafter IP, address of the network storage server (110); and
a failover configuration for providing the set of network-based services from a cloud server (120) to the user, wherein the failover configuration comprises a disaster recovery plan, hereinafter DR plan, for controlling the cloud server (120) to trigger a second private DNS setting of the router device, and the second private DNS setting is arranged to map the host name of the network storage server (110) to a virtual private network, hereinafter VPN, client IP address of a virtual machine running on the cloud server (120);
utilizing the network storage server (110) to replicate data of the user from the network storage server (110) to the cloud server (120); and
when the network storage server (110) is operating normally and a client device held by the user is within the LAN, based on the normal configuration, controlling the network storage server (110) to be accessible by the client device through the router device having the first private DNS setting, to provide the set of network-based services from the network storage server (110) to the user, wherein the set of network-based services comprises a file service;
wherein when the network storage server (110) is not operating normally and the client device held by the user is within the LAN, based on the failover configuration, the cloud server (120) controls the virtual machine running thereon to be accessible by the client device through the router device having the second private DNS setting, to provide at least one network-based service of the set of network-based services from the cloud server (120) to the user, wherein the virtual machine running on the cloud server (120) corresponds to the network storage server (110), and the at least one network-based service comprises the file service.

14. The method of claim 13, **characterized in that** the normal configuration further comprises a first dynamic DNS, hereinafter DDNS setting of a DNS server and a forward setting of the router device, wherein the first DDNS setting is arranged to map a public domain name of the network storage device to the IP address of the network storage server (110) through the router device, and the forward setting is arranged to provide a portal port for forwarding to the IP address of the network storage server (110); and the method further comprises:
when the network storage server (110) is operating normally and the client device held by the user is in a network outside the LAN, based on the normal configuration, controlling the network storage server (110) to be accessible by the client device through the DNS server having the first DDNS setting and the router device having the forward setting, to provide the set of network-based services from the network storage server (110) to the user.

15. The network storage server (110) of claim 7, the could server (120) of claim 11 or the method of claim 13, **characterized in that** the DR plan (110DR) is further arranged for controlling the cloud server (120) to trigger a second dynamic DNS, hereinafter DDNS, setting of the DNS server, wherein the second DDNS setting is arranged to map a public domain name of the network storage device to a public IP address of the virtual machine running on the cloud server (120); and when the network storage server (110) is not operating normally and the client device held by the user is in a network outside the LAN, based on the failover configuration, the cloud server (120) controls the virtual machine running thereon to be accessible by the client device through the DNS server having the second DDNS setting, to provide the at least one network-based service from the cloud server (120) to the user.
